# EUROPÄISCHE PATENTSCHRIFT

(11) **EP 2 877 319 B1**
(45) Veröffentlichungstag und Bekanntmachung des Hinweises auf die Patenterteilung: **19.10.2016**
(21) Anmeldenummer: 13762364.1
(22) Anmeldetag: 24.07.2013
(51) Int. Cl.: B29C 59/00, B29C 59/04, B44C 1/24, B30B 5/04, B30B 5/06, B23P 15/24, B29L 31/00

(54) **VERFAHREN ZUM STRUKTURIEREN EINES PRESSBANDES**
METHOD FOR STRUCTURING A PRESS BELT
PROCÉDÉ POUR STRUCTURER UNE COURROIE DE PRESSE

(30) Priorität: 24.07.2012 AT 8252012
(43) Veröffentlichungstag der Anmeldung: 03.06.2015
(73) Patentinhaber: Berndorf Band GmbH, 2560 Berndorf (AT)
(72) Erfinder: BADER, Dieter, A-2560 Berndorf (AT); FASST, Dominik, A-2700 Wiener Neustadt (AT)
(74) Vertreter: Burger, Hannes
(86) Internationale Anmeldenummer: PCT/AT2013/050143
(87) Internationale Veröffentlichungsnummer: WO 2014/015355

(56) Entgegenhaltungen:
- EP-A1- 1 034 876
- WO-A1-96/13374
- WO-A1-02/094580
- WO-A2-01/21401
- DE-A1- 4 033 230

## Beschreibung

Die Erfindung betrifft ein Verfahren zur Strukturieren eines Pressbandes aus Metall welches Oberflächenbereiche mit auf Dekorplatten zu übertragenden dreidimensionalen Prägestrukturen aufweist, wobei auf eine Außenfläche des Bandes eine Beschichtung aufgetragen wird und sodann die Prägestrukturen durch Ab-/ oder Auftragen von Material von unbeschichteten Bereichen des Pressbandes erzeugt werden, wobei das Auftragen der Beschichtung mittels eines digital gesteuerten Druckverfahrens erfolgt, bei welchem die Beschichtung in Tropfenform aufgetragen wird.

Weiters betrifft die Erfindung ein Pressband aus Metall, welches Oberflächenbereiche mit auf Dekorplatten zu übertragenden dreidimensionalen Prägestrukturen aufweist.

Darüber hinaus hat die Erfindung ein Verfahren zur Herstellung einer Dekorplatte mit einem Pressband aus Metall, welches Oberflächenbereiche mit auf Dekorplatten zu übertragenden dreidimensionalen Prägestrukturen aufweist, zum Gegenstand.

Bei der Herstellung von Dekorplatten, welche neben einem Bild auch eine dreidimensionale mit dem Bild korrespondierende Oberflächenstruktur aufweisen, kann es erforderlich sein, das Bild und die Oberflächenstruktur zur Deckung zu bringen, um einen gewünschten optischen Eindruck zu erzielen. Dieses zur Deckung bringen wird in diesem Dokument als "Synchronisieren" bezeichnet. Dem Synchronisieren kommt vor allem bei der Herstellung von Holzdekorplatten große Bedeutung zu. Hierbei sollen in erster Linie Maserungen bzw. Poren der Holzoberfläche mit entsprechenden dreidimensionalen Prägestrukturen synchronisiert werden.

Bei derartigen Dekorplatten wird ein mit einem Bild einer Holzoberfläche versehenes und imprägniertes Trägermaterial üblicherweise auf eine Trägerplatte aufgebracht und mittels eines Pressbandes die entsprechende dreidimensionale Struktur eingeprägt. Ein derartiges Verfahren ist beispielsweise aus der AT 500 312 B1 bekannt geworden.

Ein einschlägiges Pressband bzw. ein Verfahren der eingangs genannten Art zur Herstellung eines derartigen Pressbandes ist auch aus dem Dokument EP1395443B1 bekannt geworden. Nachteilig bei den bekannten Herstellungsverfahren von Dekorplatten ist, dass es aufgrund von Dehnungen des Pressbandes während des Betriebes zu Längen- und Breitenänderungen der Prägestrukturen des Bandes kommen kann. Diese Änderungen in der Geometrie der Prägestrukturen stehen jedoch einer Synchronisierung zwischen der dreidimensionalen Struktur und dem Bild der Dekorplatte entgegen.

Es ist daher eine Aufgabe der Erfindung, eine möglichst exakte Synchronisierung zwischen den dreidimensionalen, mit dem Pressband in die Dekorplatte eingebrachten Strukturen und dem auf der Dekorplatte aufgebrachten Bild zu ermöglichen.

Diese Aufgabe wird mit einem Pressband der eingangs genannten Art erfindungsgemäß dadurch gelöst, dass vor dem Strukturieren der Bänder die Länge und Breite der Prägestrukturen unter Berücksichtigung einer zu erwartenden Dehnung des Pressbandes in einem Betriebszustand ermittelt werden.

Aufgrund der Berücksichtigung der zu erwartenden Banddehnung bei der Strukturierung der Bänder kann dieser im Betrieb der Bänder auftretende Effekt bereits bei der Herstellung der Bänder kompensiert und somit eine exakte Synchronisierung der Prägestrukturen mit dem Dekorbild bei der Herstellung von Dekorplatten gewährleistet werden.

Gemäß einer vorteilhaften Variante der Erfindung ist es vorgesehen, dass zwei in Längsrichtung des Pressbandes aufeinanderfolgende Prägestrukturen durch einen Oberflächenabschnitt des Pressbandes voneinander getrennt werden. Unterschiede in der Bandlänge können bei der Herstellung unterschiedlich langer Bänder über die Lücken zwischen den Prägestrukturen ausgeglichen werden. Somit können auch mit unterschiedlich langen Bändern identische Dekorplatten hergestellt werden.

Eine günstige Weiterbildung der Erfindung sieht vor, dass in den Oberflächenabschnitt des Pressbandes, der zwischen zwei Prägestrukturen liegt, eine Zwischenstruktur eingebracht wird, welche sich von den Prägestrukturen unterscheidet. Bei der Zwischenstruktur handelt es sich bevorzugter Weise um eine neutrale Struktur, also eine Struktur, welche beispielsweise keine Verästelungen, Holzporen etc. sondern nur eine einfache geometrische Struktur aufweist. Bei der Zwischenstruktur kann es sich beispielsweise um mehrere parallele Linien, Rauten, Gitter etc. handeln. Bei der Zwischenstruktur handelt es sich besonders bevorzugt um ein Muster, welches hohe Ähnlichkeiten mit einem Grundmuster der Prägestruktur aufweist, jedoch im Gegensatz zu diesem keine markanten Stellen wie z.B. Astlöcher enthält.

Auf Grund der in der Industrie üblichen Abmessungen sind zwei Wiederholungen der Prägestrukturen (also zwei Dekore) auf einer Trägerplatte üblich. Als besonders vorteilhaft hat es sich in diesem Zusammenhang herausgestellt, wenn eine ungerade Anzahl von Prägestrukturen in und/oder auf das Pressband eingebracht wird. Auf diese Weise lässt sich eine gute Selbstreinigung des Pressbandes im Betrieb erzielen. Üblicherweise werden die Strukturen in harzgetränkte Papiere eingeprägt, wobei es zu einem Anbacken von Harz an Stellen kommt, wo kein Druck auf der Platte ist. An dieser Stelle sei darauf hingewiesen, dass der Begriff harzgetränktes "Papier" in diesem Dokument synonym für alle Arten von plastisch und aushärtbaren Folien bzw. folienartige Materialien, welche mit einem plastisch aushärtbaren Material getränkt sind, verwendet wird. Durch die ungerade Anzahl an Prägestrukturen (Rapporten) kann gewährleistet werden, dass jede Lücke zwischen zwei Prägestrukturen während des Herstellungsvorganges abgepresst und somit gereinigt wird. Dieser Effekt lässt sich auch dadurch erzielen bzw. verbessern, dass die Abstände der Prägestrukturen und somit die Größe der Lücken variieren.

Eine bevorzugte Variante der Erfindung sieht vor, dass die Dehnung des Pressbandes anhand einer effektiven Banddicke des Pressbandes berechnet wird. Hierbei kann die effektive Banddicke einem Wert für einen Minimalabstand der Bandaußenseite zu der Bandinnenseite des Pressbandes nach Herstellung der Struktur entsprechen.

Die oben genannte Aufgabe lässt sich auch mit einem Pressband der eingangs genannten Art erfindungsgemäß dadurch lösen, welches nach dem erfindungsgemäßen Verfahren strukturiert worden ist.

Eine bevorzugte Ausführungsform sieht vor, dass das Pressband eine ungerade Anzahl an Prägestrukturen aufweist. Auch kann es vorgesehen sein, dass Abstände zwischen den Prägestrukturen unterschiedlich sind.

Die der Erfindung zugrunde liegende Aufgabe lässt sich auch mit einem Verfahren der eingangs genannten Art zur Herstellung einer Dekorplatte dadurch lösen, dass ein erfindungsgemäßes Pressband verwendet wird.

Eine besonders vorteilhafte Weiterbildung der Erfindung sieht vor, dass zur Herstellung der Dekorplatten verwendete Trägerplatten auf einer Beförderungseinrichtung einem Pressbereich zugeführt werden, in welchem das Pressband angeordnet ist, wobei eine Bahn einer plastisch und aushärtbaren Folie oder eine Bahn eines mit einem plastisch aushärtenden Material getränkten folienartigen Materials dem Pressbereich kontinuierlich zugeführt und mit den Trägerplatten durch das Pressband verpresst wird.

Die Erfindung samt weiteren Vorteilen wird im Folgenden anhand einiger nicht einschränkender Ausführungsbeispiele näher erläutert, welche in den Zeichnungen dargestellt sind. In diesen zeigen jeweils in stark schematisch vereinfachter Darstellung:
- Fig. 1: eine perspektivische Ansicht einer Vorrichtung zur Herstellung von Dekorplatten;
- Fig. 2: eine perspektivische Ansicht einer anderen Variante einer Vorrichtung zur Herstellung von Dekorplatten;
- Fig. 3: eine Draufsicht auf einen Abschnitt eines erfindungsgemäßen Pressbandes;
- Fig. 4: eine Draufsicht auf eine Prägestruktur eines erfindungsgemäßen Pressbandes;
- Fig. 5: einen Schnitt entlang der Linie V-V in Fig. 3.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen. Weiters können auch Einzelmerkmale oder Merkmalskombinationen aus den gezeigten und beschriebenen unterschiedlichen Ausführungsbeispielen für sich eigenständige, erfinderische oder erfindungsgemäße Lösungen darstellen.

Sämtliche Angaben zu Wertebereichen in gegenständlicher Beschreibung sind so zu verstehen, dass diese beliebige und alle Teilbereiche daraus mit umfassen, z.B. ist die Angabe 1 bis 10 so zu verstehen, dass sämtliche Teilbereiche, ausgehend von der unteren Grenze 1 und der oberen Grenze 10 mitumfasst sind, d.h. sämtliche Teilbereich beginnen mit einer unteren Grenze von 1 oder größer und enden bei einer oberen Grenze von 10 oder weniger, z.B. 1 bis 1,7, oder 3,2 bis 8,1 oder 5,5 bis 10.

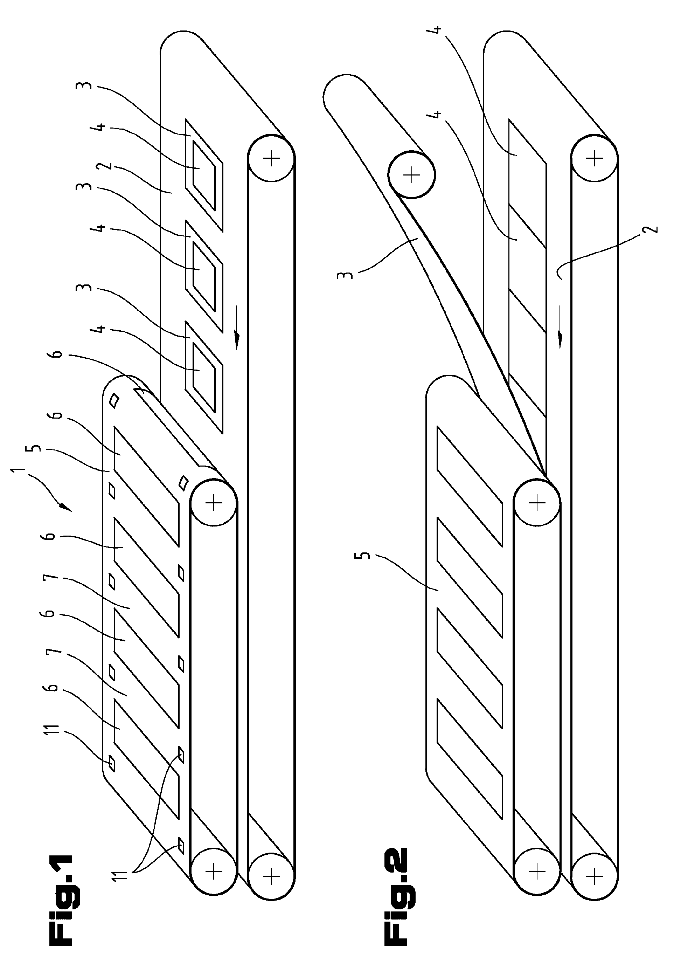

Gemäß Fig. 1 kann eine Vorrichtung zur Herstellung von Dekorplatten, beispielsweise Laminaten mit Holzdekoroberflächen oder Dekorfließen mit einer Steindekoroberfläche, eine Doppelbandpresse 1 aufweisen. Auf einem unteren Band 2 sind hierbei Trägerplatten 3, auf welchen sich ein mit Harz oder Ähnlichem getränktes Papier 4, welches einen Bildaufdruck trägt, angeordnet. Bei der in Fig. 1 dargestellten Ausführungsform wird das vorgeschnittene Papier 4 auf die Trägerplatten 3 aufgelegt. Auch wenn es hier anders dargestellt ist, so bedeckt das Papier 4 die als Auflagefläche auf den Trägerplatten 3 dienende Oberfläche der Trägerplatten 3 im Wesentlichen vollständig.

Weiters ist ein Pressband 5 vorgesehen, welches Prägestrukturen 6 aufweist, die in das mit Harz getränkte Papier 4 eingepresst werden, um eine entsprechende dreidimensionale Oberflächenstruktur in der Dekorplatte zu erhalten.

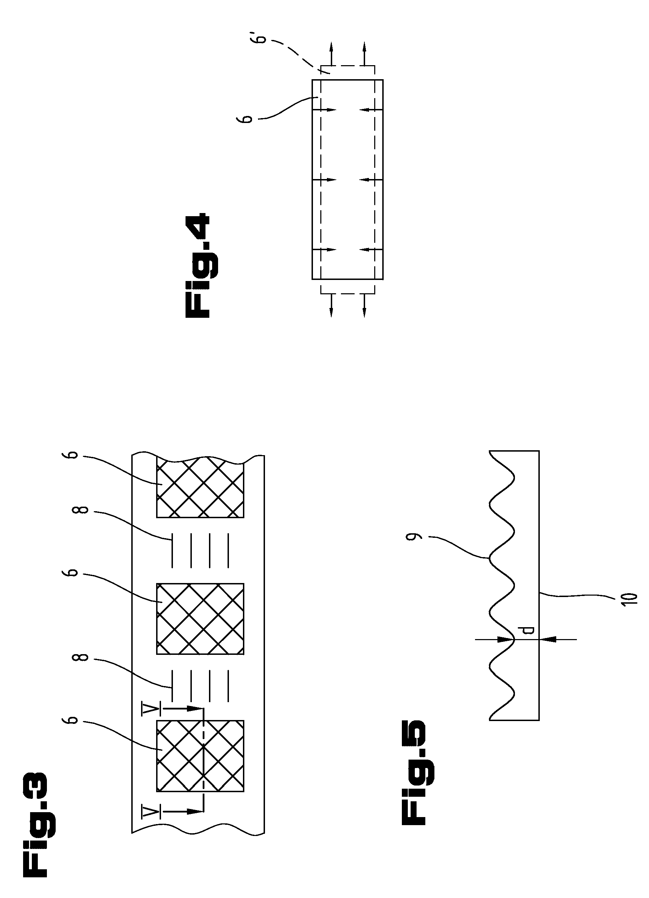

Die Prägestrukturen 6 des Pressbandes 5 sind voneinander durch im Folgenden als "Lücken" bezeichnete Oberflächenabschnitte 7 voneinander beabstandet, wie dies beispielsweise aus Fig. 3 ersichtlich ist. Aus Fig. 3 ist auch ersichtlich dass die Lücken eine Zwischenstruktur 8 aufweisen können, die sich von den Prägestrukturen 6 unterscheidet und ein "neutrales Muster", wie beispielsweise einfache geometrische Strukturen, wie gerade parallele Linien, Gitter, etc. aufweist. Bei der Zwischenstruktur handelt es sich besonders bevorzugt um ein Muster, welches hohe Ähnlichkeiten mit dem Grundmuster aufweist, jedoch im Gegensatz zu diesem keine markanten Stellen wie z.B. Astlöcher enthält.

Weiters können in dem Pressband 5 noch Markierungen 11, beispielsweise in Form von Schlitzen, Oberflächenstrukturen, Farbmarkierungen, etc., vorgesehen sein, um anhand dieser Markierungen eine Banddehnung oder eine Ist-Stellung des Bandes im laufenden Betrieb leichter erfassen zu können. Bei einer erfassten Abweichung von einer Sollposition, dies ist beispielsweise der Fall, wenn die Synchronisation zwischen Prägestrukturen 6 und Dekorbildern nicht mehr gegeben ist, kann das Band beispielsweise abgebremst und gedehnt werden, um den Positionsfehler zu korrigieren.

Um eine mit dem Bild möglichst synchrone Prägung der Dekorplatten zu ermöglichen, können die Abstände zwischen den einzelnen Trägerplatten 3 vorgegeben werden. Die Umlaufgeschwindigkeit des Pressbandes 5, welches als Endlosband ausgebildet sein kann, und des Bandes 2 sind entsprechend aufeinander abgestimmt. Auch sind die Flächen der Prägestrukturen an die Größe der herzustellenden Dekorplatten angepasst. Fehler in der Synchronisation zwischen den Prägestrukturen und den Dekorbildern können auch durch Erhöhung oder Verringerung der Zufuhrgeschwindigkeit der Trägerplatten 3 ausgleichen.

In Fig. 2 ist eine weitere Vorrichtung zur Herstellung von Dekorplatten mit einer dreidimensionalen Oberflächenstruktur dargestellt. Im Gegensatz zu der in Fig. 1 dargestellten Ausführungsform kann das harzgetränkte Papier 4, welches Träger der Dekorbilder ist, kontinuierlich zugeführt werden, ohne vor dem Pressband zugeschnitten werden zu müssen. Hierzu kann das harzgetränkte Papier 4 von einer Speicherrolle abgerollt werden. Die Trägerplatten 3 können bei dieser Ausführungsform abstandslos aneinander gereiht oder in einem vordefinierten Abstand zueinander dem Pressbereich, in welchem das Pressband 5 angeordnet ist, zugeführt werden.

Wie in Fig. 4 dargestellt, kommt es im Betrieb des Pressbandes 5 zu einer Dehnung des Bandes in Längsrichtung, wodurch sich unter Belastung die Umfangsgeometrie der unbelasteten Prägestruktur 6 in die der Prägestruktur 6'ändert. Diese Änderungen in der Geometrie der Prägestrukturen haben zur Folge, dass eine exakte Synchronisierung der Prägestruktur mit dem Dekorbild erschwert wird.

Gemäß dem erfindungsgemäßen Verfahren zum Strukturieren des Pressbandes wird auf eine Außenfläche des Bandes mittels eines digital gesteuerten Druckverfahrens eine Beschichtung in Tropfenform aufgetragen und sodann die Prägestrukturen durch Ab-/ oder Auftragen von Material von unbeschichteten Bereichen des Pressbandes erzeugt.

Um das oben genannte Problem der Änderung der Geometrie der Prägestrukturen 6 im Betrieb zu lösen, werden vor dem Strukturieren der Bänder die Länge und Breite der unter Berücksichtigung einer zu erwartenden Dehnung des Pressbandes in einem Betriebszustand ermittelt. Die zu erwartende Dehnung des Bandes lässt sich in an sich bekannter Weise aus dem Elastizitätsmodul und der auftretenden Betriebsspannung berechnen. Da es sich bei dem Pressband um einen flächigen Körper handelt kann anstelle von Spannungen mit Flüssen und mit einem dickenabhängigen Elastizitätsmodul, der einer Steifigkeit entspricht, gerechnet werden. Hierbei hat es sich bewährt, wenn als Banddicke des dickenabhängigen Elastizitätsmoduls eine effektive Banddicke d verwendet wird, welche wie in Fig. 5 dargestellt ist dem kleinsten Abstand zwischen Bandvorderseite 9 und Bandrückseite 9 entspricht. Die effektive Banddicke d liegt hierbei im Bereich der Prägestruktur 6 und ist durch die Tiefe des Materialabtrages beim Strukturieren bestimmt und entspricht einem hierfür vorgegebenen Sollwert.

Auch können für die zu erwartende Dehnung ein von anderen gleichartigen Bändern bekannter, gegebenenfalls empirisch ermittelte Werte genommen werden.

Hierauf wird die Größe der Prägestruktur derart skaliert, dass sie unter Betriebszuständen die Sollgröße aufweist. Hierzu kann beispielswiese von den bekannten Abmessungen eines Dekorbildes und der Lage von charakteristischen Punkten in dem Dekorbild, wie beispielsweise Holzporen oder Blumen ausgegangen werden. Die Lage der charakteristischen Punkte, Linien und die Abmessungen des Dekorbildes definieren die Sollwerte für die Lage der Prägestrukturen 6 in einem Betriebszustand. Ausgehend von diesen Sollwerten für den Betriebszustand können dann anhand der Dehnung in Längsrichtung und der Querkontraktion die Sollwerte für den Betriebszustand in die für die Herstellung der Strukturierung erforderlichen Werte für die mit dem Drucker zu beschichtenden Bereiche umgerechnet werden. Im einfachsten Fall kann die hergestellte Prägestruktur 6 gegenüber dem Betriebszustand des Pressbandes 5 um die im Betrieb zu erwartende Längenänderung in Bandlängsrichtung gestaucht und in Bandquerrichtung gedehnt sein.

### Bezugszeichenaufstellung

- 1: Doppelbandpresse
- 2: Band
- 3: Trägerplatte
- 4: Papier
- 5: Pressband

- 6: Prägestruktur
- 6': Prägestruktur
- 7: Oberflächenabschnitt
- 8: Zwischenstruktur
- 9: Bandaußenseite
- 10: Bandinnenseite

- 11: Markierung

## Patentansprüche

1. Verfahren zum Strukturieren eines Pressbandes (5) aus Metall welches Oberflächenbereiche mit auf Dekorplatten zu übertragenden dreidimensionalen Prägestrukturen (6) aufweist, wobei auf eine Außenfläche des Pressbandes (5) eine Beschichtung aufgetragen wird und sodann die Prägestrukturen (6) durch Ab-/ oder Auftragen von Material von unbeschichteten Bereichen des Pressbandes (5) erzeugt werden, wobei das Auftragen der Beschichtung mittels eines digital gesteuerten Druckverfahrens erfolgt, bei welchem die Beschichtung in Tropfenform aufgetragen wird, **dadurch gekennzeichnet, dass** vor dem Strukturieren der Pressbänder (5) die Länge und Breite der Prägestrukturen (6) unter Berücksichtigung einer zu erwartenden Dehnung des Pressbandes (5) in einem Betriebszustand ermittelt werden.

2. Verfahren nach Anspruch 1, **dadurch gekennzeichnet, dass** zwei in Längsrichtung des Pressbandes (5) aufeinanderfolgende Prägestrukturen (6) durch einen Oberflächenabschnitt des Pressbandes (5) voneinander getrennt werden.

3. Verfahren nach Anspruch 2, **dadurch gekennzeichnet, dass** in den Oberflächenabschnitt (7) des Pressbandes (5), der zwischen zwei Prägestrukturen (6) liegt, eine Zwischenstruktur (8) eingebracht wird, welche sich von den Prägestrukturen (6) unterscheidet.

4. Verfahren nach einem der Ansprüche 1 bis 3, **dadurch gekennzeichnet, dass** eine ungerade Anzahl von Prägestrukturen (6) in und/oder auf das Pressband (5) eingebracht wird.

5. Verfahren nach einem der Ansprüche 1 bis 4, **dadurch gekennzeichnet, dass** die Dehnung des Pressbandes (5) anhand einer effektiven Banddicke (d) des Pressbandes (5) berechnet wird.

6. Verfahren nach Anspruch 5, **dadurch gekennzeichnet, dass** die effektive Banddicke (d) einem Wert für einen Minimalabstand der Bandaußenseite (9) zu der Bandinnenseite (10) des Pressbandes (5) nach Herstellung der Prägestruktur (6) entspricht.

7. Pressband (5) aus Metall, welches Oberflächenbereiche mit auf Dekorplatten zu übertragenden dreidimensionalen Prägestrukturen (6) aufweist, **dadurch gekennzeichnet, dass** es nach einem Verfahren nach einem der Ansprüche 1 bis 6 strukturiert ist.

8. Pressband nach Anspruch 7, **dadurch gekennzeichnet, dass** das Pressband eine ungerade Anzahl an Prägestrukturen (6) und/oder unregelmäßige Abstände zwischen den Prägestrukturen (6) aufweist.

9. Verfahren zur Herstellung einer Dekorplatte mit einem Pressband (5) aus Metall, welches Oberflächenbereiche mit auf Dekorplatten zu übertragenden dreidimensionalen Prägestrukturen (6) aufweist, **dadurch gekennzeichnet, dass** das ein Pressband (5) nach einem der Ansprüche 7 oder 8 verwendet wird.

10. Verfahren nach Anspruch 9, **dadurch gekennzeichnet, dass** zur Herstellung der Dekorplatten verwendete Trägerplatten (3) auf einer Beförderungseinrichtung einem Pressbereich zugeführt werden, in welchem das Pressband (5) angeordnet ist, wobei eine Bahn einer plastisch und aushärtbaren Folie oder eine Bahn eines mit einem plastisch aushärtenden Material getränkten folienartigen Materials dem Pressbereich kontinuierlich zugeführt und mit den Trägerplatten (3) durch das Pressband (5) verpresst wird.

## Claims

1. Method for structuring a press belt (5) made of metal, which has surface areas having three-dimensional embossed structures (6) to be transferred to decorative panels, wherein a coating is applied to an outer face of the press belt (5) and the embossed structures (6) are then produced by abrading material from or applying material to uncoated regions of the press belt (5), wherein the application of the coating is carried out by means of a digitally controlled printing method in which the coating is applied in droplet form, **characterized in that** before the press belts (5) are structured, the length and width of the embossed structures (6) are determined, taking into account an anticipated elongation of the press belt (5) in an operative state.

2. Method according to claim 1, **characterized in that** two embossed structures (6) arranged consecutively in the longitudinal direction of the press belt (5) are separated from one another by a surface portion of the press belt (5).

3. Method according to claim 2, **characterized in that** an intermediate structure (8) which is different from the embossed structures (6) is imparted to the surface portion (7) of the press belt (5) lying between two embossed structures (6).

4. Method according to one of claims 1 to 3, **characterized in that** an odd number of embossed structures (6) is imparted into and/or onto the press belt (5).

5. Method according to one of claims 1 to 4, **characterized in that** the elongation of the press belt (5) is calculated on the basis of an effective belt thickness (d) of the press belt (5).

6. Method according to claim 5, **characterized in that** the effective belt thickness (d) corresponds to a value for a minimum distance between the belt outer face (9) and the belt inner face (10) of the press belt (5) after the embossed structure (6) is produced.

7. Press belt (5) made of metal having surface areas with three-dimensional embossed structures (6) to be transferred to decorative panels, **characterized in that** it is structured by a method according to one of claims 1 to 6.

8. Press belt according to claim 7, **characterized in that** the press belt has an odd number of embossed structures (6) and/or irregular distances between the embossed structures (6).

9. Method for producing a decorative panel by means of a press belt (5) made of metal which has surface areas with three-dimensional embossed structures (6) to be transferred to decorative panels, **characterized in that** a press belt (5) according to one of claims 7 or 8 is used.

10. Method according to claim 9, **characterized in that** support plates (3) used to produce the decorative panels are fed on a conveyor system to a pressing area in which the press belt (5) is disposed, wherein a web of a plastically curable film or a web of a film-type material impregnated with a plastically curing material is continuously fed to the pressing area and pressed with the support plates (3) by the press belt (5).

## Revendications

1. Procédé pour la structuration d'une courroie de presse (5) en métal qui présente des zones surfaciques dotées de structures en relief (6) tridimensionnelles à transférer sur des panneaux décoratifs, dans lequel un revêtement est appliqué sur une surface extérieure de la courroie de presse (5), et les structures en relief (6) sont ensuite produites par élimination de matière de zones non revêtues de la courroie de presse (5) ou application de matière sur celles-ci, dans lequel l'application du revêtement survient au moyen d'un procédé d'impression commandé de manière numérique par l'intermédiaire duquel le revêtement est appliqué sous forme de gouttes, **caractérisé en ce qu'**avant la structuration de la courroie de presse (5), la longueur et la largeur des structures en relief (6) sont déterminées en tenant compte d'une dilatation à prévoir de la courroie de presse (5) dans un état de fonctionnement.

2. Procédé selon la revendication 1, **caractérisé en ce que** deux structures en relief (6) consécutives dans la direction longitudinale de la courroie de presse (5) sont séparées par un tronçon de surface de la courroie de presse (5).

3. Procédé selon la revendication 2, **caractérisé en ce que** dans le tronçon de surface (7) de la courroie de presse (5) qui s'étend entre deux structures en relief (6) est introduite une structure intermédiaire (8) qui diffère des structures en relief (6).

4. Procédé selon l'une quelconque des revendications 1 à 3, **caractérisé en ce qu'**un nombre impair de structures en relief (6) sont introduites dans et/ou sur la courroie de presse (5).

5. Procédé selon l'une quelconque des revendications 1 à 4, **caractérisé en ce que** la dilatation de la courroie de presse (5) peut être calculée sur la base d'une épaisseur de courroie effective (d) de la courroie de presse (5).

6. Procédé selon la revendication 5, **caractérisé en ce que** l'épaisseur de courroie effective (d) correspond à une valeur d'une distance minimale de la face extérieure de courroie (9) à la face intérieure de courroie (10) de la courroie de presse (5) après la réalisation de la structure en relief (6).

7. Courroie de presse (5) appuyant sur la courroie (5) en métal, qui présente des zones surfaciques dotées de structures en relief (6) tridimensionnelles à transférer sur des panneaux décoratifs, **caractérisée en ce qu'**elle est structurée par un procédé selon l'une quelconque des revendications 1 à 6.

8. Courroie de presse selon la revendication 7, **caractérisé en ce que** la courroie de presse présente un nombre impair de structures en relief (6) et/ou des distances irrégulières entre les structures en relief (6).

9. Procédé de fabrication de panneaux décoratifs comportant une courroie de presse (5) en métal qui présente des zones surfaciques dotées de structures en relief (6) tridimensionnelles à transférer sur des panneaux décoratifs, **caractérisé en ce qu'**une courroie de presse (5) selon la revendication 7 ou 8 est utilisée.

10. Procédé selon la revendication 9, **caractérisé en ce que** des panneaux de support (3) utilisés pour la préparation de panneaux décoratifs sont alimentés par un dispositif de transport dans une zone de la presse dans laquelle la courroie de presse (5) est agencée, dans lequel une bande d'une feuille de matière plastique et durcissable ou une bande d'un matériau en forme de feuille imprégnée d'une matière plastique durcissable est alimentée en continu dans la zone de la presse et pressée avec les panneaux de support (3) par la courroie de presse (5).
